**Europäisches Patentamt**

**European Patent Office**

**Office européen des brevets**

(19)

(11) Veröffentlichungsnummer: **0 253 758**
**B1**

# (12) EUROPÄISCHE PATENTSCHRIFT

(45) Veröffentlichungstag der Patentschrift:
22.11.90

(21) Anmeldenummer: 87730071.5

(22) Anmeldetag: 02.07.87

(51) Int. Cl.⁵: **H02B 1/28**

(54) **Elektrische Schaltanlage in schlagwettergeschützter Ausführung mit einer Steckvorrichtung.**

(30) Priorität: 04.07.86 DE 3622812

(43) Veröffentlichungstag der Anmeldung:
20.01.88 Patentblatt 88/3

(45) Bekanntmachung des Hinweises auf die Patenterteilung:
22.11.90 Patentblatt 90/47

(84) Benannte Vertragsstaaten:
AT BE CH DE FR GB LI LU NL

(56) Entgegenhaltungen:
EP-A- 0 096 652
DE-B- 1 182 325
FR-A- 1 447 378

(73) Patentinhaber: Siemens Aktiengesellschaft,
Wittelsbacherplatz 2, D-8000 München 2(DE)

(72) Erfinder: Pollerspöck, Kurt, Schuckertdamm 328,
D-1000 Berlin 13(DE)

## Beschreibung

Die Erfindung betrifft eine elektrische Schaltanlage in schlagwettergeschützter Ausführung mit einem Sammelschienenkanal auf der Eingangsseite und in Gehäusen der Schutzart druckfeste Kapselung untergebrachten Schalt- und Steuergeräten, wobei zwischen den druckfesten Gehäusen und dem Sammelschienenkanal schlagwettergeschützte Kontaktelemente als Bestandteil einer Steckvorrichtung angeordnet sind, deren Dosenteil an dem Sammelschienenkanal und deren Steckerteil an dem druckfesten Gehäuse angeordnet ist.

Eine Schaltanlage dieser Art ist durch die DE-A 3 221 900 bekannt geworden. Die druckfesten Gehäuse lassen sich hierbei von dem Sammelschienenkanal nach dem Lösen von Befestigungsschrauben abnehmen, wobei eine nahe bei der Steckvorrichtung befindliche Schraube mit einem in dem Sammelschienenkanal befindlichen Endschalter zusammenwirkt. Je nach der gewählten Schaltung ist hiermit zu erreichen, daß die druckfesten Gehäuse ohne Last bzw. ohne Spannung an den Sammelschienenkanal angesetzt oder von diesem abgenommen werden können. Eine dem Dosenteil der Steckverbindung zugeordnete Schutzklappe, deren Befestigungsschraube gleichfalls mit dem Endschalter zusammenwirkt, gestattet einen dauerhaften Betrieb der nach Abnahme eines Gehäuses verbleibenden weiteren Gehäuse.

Der Erfindung liegt die Aufgabe zugrunde, die Durchführung von Wartungsarbeiten an einzelnen druckfesten Gehäusen bzw. den in diesen untergebrachten Geräten zu ermöglichen, ohne die gesamte Anlage abzuschalten und die Gehäuse von dem Sammelschienenkanal völlig entfernen zu müssen.

Gemäß der Erfindung wird diese Aufgabe dadurch gelöst, daß der Sammelschienenkanal ein den Abmessungen der druckfesten Gehäuse und ihrem Fahrweg angepaßtes Tragorgan sowie ein die druckfesten Gehäuse von oben übergreifendes Schutzorgan besitzt und daß die druckfesten Gehäuse eine durch vertikale Verschiebung zu entriegelnde Tür besitzt, wobei das Schutzorgan bei eingefahrenem druckfestem Gehäuse eine Sperre gegen eine Öffnung der Tür bildet. Sowohl im Betriebszustand als auch im getrennten Zustand der Steckvorrichtung wird somit das Gewicht des druckfesten Gehäuses von dem Tragorgan aufgenommen, wobei zur Verschiebung für vergleichbare Zwecke bekannte Mittel, z. B. eine Gewindespindel, vorgesehen sein können. Durch die vertikale Verschiebbarkeit der Gehäusetüren ist die Möglichkeit geschaffen, mehrere nebeneinander angeordnete druckfeste Gehäuse in gleicher Weise zu sichern. Das diese Sicherung bewirkende Schutzorgan kann beispielsweise eine Leiste sein, die sich bei eingefahrenem druckfesten Gehäuse dicht oberhalb der Tür befindet. In gleicher Weise wirksam können einzelne Finger oder Stege sein. Das Schutzorgan kann aber auch insgesamt als flächenhafte Abdeckung des druckfesten Gehäuses ausgebildet sein, wodurch nicht nur ein Schutz gegen eine unzulässige Öffnung der Tür, sondern auch gegen eine Verschmutzung der Anlage geschaffen ist.

Der Dosenteil der erwähnten Steckvorrichtung kann einen Tastschalter aufweisen, der beim Ausfahren des druckfesten Gehäuses erst nach Trennung der Kontaktelemente der Steckvorrichtung, jedoch vor der Trennung des Steckerteiles von dem Dosenteil freigegeben wird, um die Schaltanlage spannungslos zu machen. In dieser Anordnung eignet sich der Tastschalter als Steuerelement für einen den Sammelschienen des Sammelschienenkanales vorgeordneten Leistungsschalter. Damit ist sichergestellt, daß der offene Dosenteil der Steckvorrichtung spannungslos ist, wenn sich ein druckfestes Gehäuse in der Aus- oder Trennstellung befindet oder von der Anlage völlig entfernt ist. Durch ein Verschlußorgan, wie es in der eingangs erwähnten DE-A 3 221 900 beschrieben ist, kann dann der Dosenteil ordungsgemäß verschlossen und der Tastschalter wieder betätigt werden. Die Schaltanlage kann dann mit den verbleibenden Geräten ohne Einbuße an Sicherheit benutzt werden.

Es empfiehlt sich, einen Verstellantrieb für das druckfeste Gehäuse mit wenigstens einer Raststellung vorzusehen, die beim Ausfahren erst nach der Trennung der Kontaktelemente der Steckvorrichtung, jedoch vor Freigabe des Tastschalters wirksam ist. Auf diese Weise ist das Auffinden der Test- oder Wartungsstellung wesentlich erleichtert.

Die Erfindung wird im folgenden anhand des in den Figuren dargestellten Ausführungsbeispieles näher erläutert.

Die Figuren 1, 2, 3, 4 und 5 zeigen eine Schaltanlage in einer Seitenansicht, wobei sich ein verfahrbar angeordnetes druckfestes Gehäuse in unterschiedlichen Stellung befindet. Dabei zeigen die Figuren 1, 2, 3 und 4 das druckfeste Gehäuse im Betriebszustand, in einer Teststellung, in einer Aus- oder Wartungsstellung sowie in der Trennstellung, während in der Figur 5 das druckfeste Gehäuse abgenommen gezeigt ist.

Die Figur 6 zeigt eine Einzelheit im Bereich des Deckels eines druckfesten Gehäuses.

Die Figur 7 zeigt die Tür des druckfesten Gehäuses in geöffnetem Zustand.

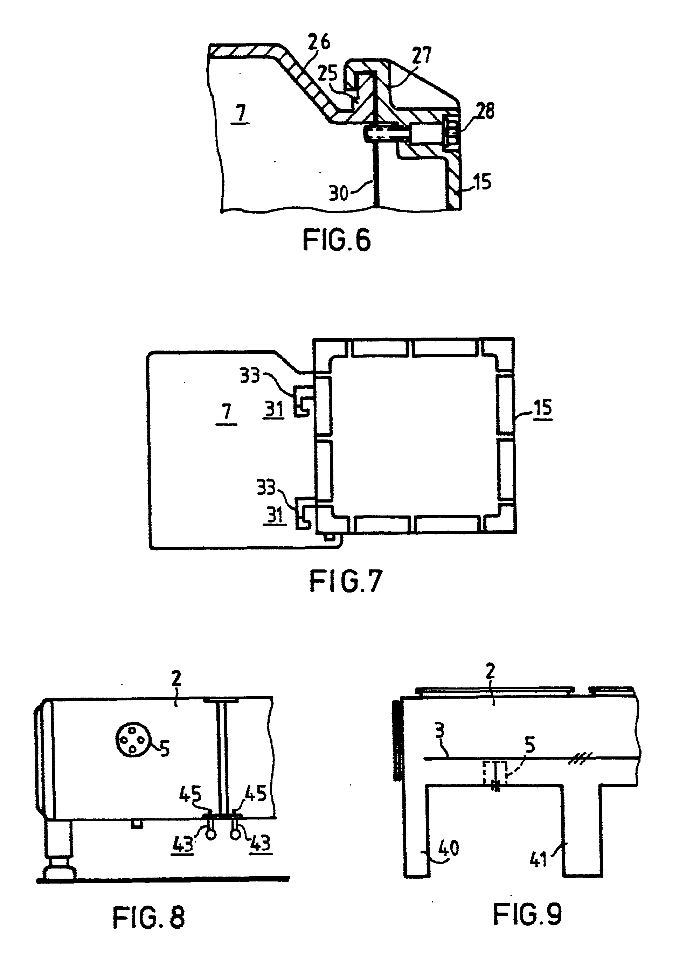

Weitere Einzelheiten sind den Figuren 8 und 9 zu entnehmen. Hierin zeigt die Figur 8 eine Frontansicht eines Teiles eines Sammelschienenkanals mit abgenommenem druckfesten Gehäuse und mit einer Rastvorrichtung. Die Figur 9 zeigt in einer Draufsicht auf einem Sammelschienenkanal die Gestalt von Schutzorganen.

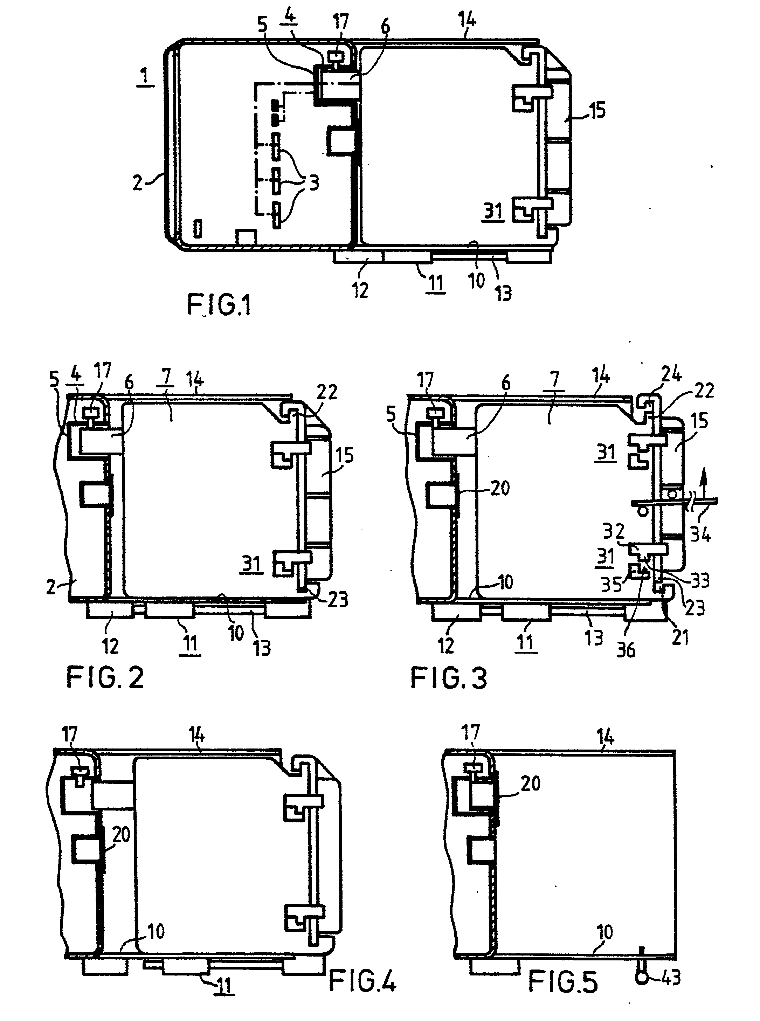

Die in den Figuren 1 bis 5 gezeigte Schaltanlage 1 weist einen Sammelschienenkanal 2 auf, der schematisch angedeutet Sammelschienen 3 enthält. Mit diesen sind in nicht näher dargestellter Weise die Kontaktelemente des Dosenteiles 5 einer Steckvorrichtung 4 verbunden, zu der ein Steckerteil 6 gehört, das an einem druckfesten Gehäuse 7 angebracht ist. Dieses Gehäuse enthält Schalt- und Steuergeräte sowie Schutzeinrichtungen in einer zweckentsprechenden Zusammenstellung, wie sie für die Versorgung der vorgesehenen Verbraucher benötigt wird. Beispielsweise kann das druckfeste Gehäuse 7 hierzu Schütze, Überstromschutzgeräte, Schmelzsicherungen, Trennschalter sowie Anzeige- und Meßeinrichtungen enthalten.

Wie die Figuren 1 bis 4 zeigen, ruht das druckfeste Gehäuse 7 auf einem unteren Tragorgan 10, das zur Vereinfachung der Darstellung als Fortsetzung der Bodenwand des Sammelschienenkanales 2 dargestellt ist. Das Tragorgan 10 kann jedoch auch ein gesondertes Teil sein, und zwar sowohl in flächenhafter oder schienenartiger Ausführung. An der Unterseite des Tragorgans 10 ist ein Mutterstück 12 angebracht, das mit einer Gewindespindel 13 zusammenwirkt. Diese Teile bilden einen Verstellantrieb 11. Die Gewindespindel 13 ist an der Unterseite des druckfesten Gehäuses 7 angebracht, wobei in dem Tragorgan 10 eine passende Ausnehmung vorgesehen ist, falls dieses flächenhaft ausgebildet ist.

Die obere Begrenzung des Einfahrraumes für das druckfeste Gehäuse 7 wird durch ein Schutzorgan 14 gebildet, das wiederum zur Vereinfachung der Darstellung als Fortsetzung der Oberwand des Sammelschienenkanales 2 dargestellt ist. Abweichend von einer solchen einstückigen Ausführung können aber beispielsweise das Tragorgan 10 und das Schutzorgan 14 einen zusammenhängenden Rahmen bilden, der jeweils in einer dem druckfesten Gehäuse 7 entsprechenden Größe an dem Sammelschienenkanal 2 befestigt wird oder auf einem für den Sammelschienenkanal 2 und die genannten Teile gemeinsamen Gestell angebracht wird. Die Tragorgane 10 und die Schutzorgane 14 können auch für mehrere nebeneinander anzuordnende druckfeste Gehäuse 7 etwa entsprechend der DE-A 3 221 900 zusammenhängend ausgeführt sein. Das Schutzorgan 14 hat vor allem die Aufgabe, eine unzulässige Öffnung einer Tür 15 des druckfesten Gehäuses 7 zu verhindern, wenn die Öffnung aufgrund des gegebenen Betriebszustandes gefahrbringend sein kann. Im Hinblick hierauf kann das Schutzorgan 14 beispielsweise als in geeigneter Weise befestigte Leiste ausgebildet sein, die sich dicht oberhalb der Tür 15 befindet. In den Figuren 1 bis 4 ist das Schutzorgan 14 darüberhinaus flächenhaft, d. h. als Schutzdach ausgebildet, so daß es zugleich das druckfeste Gehäuse vor einer Verschmutzung von oben schützt. Eine andere Ausführung zeigt die Figur 9, in der fingerartige Schutzorgane 40 und 41 dargestellt sind. Das schmale Schutzorgan 40 erfaßt die Tür eines am Ende des Sammelschienenkanals 2 anzusetzenden druckfesten Gehäuses, während das breite Schutzorgan 41 für die Türen von zwei benachbarten Gehäusen gemeinsam ist.

In der Figur 1 ist das druckfeste Gehäuse 7 in seiner Betriebsstellung gezeigt, in der der Steckerteil 6 der Steckvorrichtung 5 vollständig in dem Dosenteil 4 aufgenommen ist und somit die nicht gezeigten Kontaktelemente miteinander im Eingriff stehen. Wie man erkennt, übergreift das Schutzorgan 14 die Tür 15, so daß diese nicht angehoben und geöffnet werden kann.

In der Stellung gemäß der Figur 2 ist das druckfeste Gehäuse 7 auf dem Tragorgan 10 zwar nach rechts verschoben, jedoch nur soweit, daß die Tür 15 noch im Schutzbereich des Schutzorgans 14 steht. Die Kontaktglieder für die Phasenleiter sind getrennt, die Kontaktglieder für den Schutzleiter und die Steuerung der Schaltgeräte sind noch geschlossen, so daß Steuerungsvorgänge probeweise durchgeführt werden können. Unverändert betätigt ist ferner der Stößel eines dem Dosenteil 4 zugeordneten Tastschalters 17, der sich im Steuerkreis eines den Sammelschienen 3 vorgeordneten Schutz- oder Leistungsschalters befindet. Hiermit wird erreicht, daß weitere an die Sammelschienen 3 über entsprechende Steckvorrichtungen angeschlossene druckfeste Gehäuse in Betrieb bleiben können. Der Verstellantrieb 11 kann eine Raststellung aufweisen, die in dieser Stellung der Teile wirksam ist. Dies kann durch einen Anschlag erreicht werden, gegen den das druckfeste Gehäuse 7 oder der Verstellantrieb 11 beim Ausfahren stößt und der erst durch eine hierzu vorgesehene Bedienungshandlung aufgehoben werden kann. Bei der Stellung des druckfesten Gehäuses 7 gemäß der Figur 2 handelt es sich somit um eine Teststellung, in der weiterhin mit den übrigen druckfesten Gehäusen Betrieb gemacht werden kann, da der zugehörige Leistungsschalter der Anlage noch eingeschaltet ist.

Wird das druckfeste Gehäuse 7 jedoch entsprechend der Figur 3 weiter nach rechts verfahren, so bleibt die Schaltstellung des Tastschalter 17 weiterhin erhalten, während nun alle Kontaktglieder der Steckvorrichtung 5, also auch die Steuerstromkreise, unterbrochen sind. Ferner befindet sich nun die Tür 15 außerhalb des Wirkungsbereiches des Schutzorgans 14 und kann geöffnet werden, wie dies nachstehend erläutert wird. Auch in dieser Stellung bleibt der Leistungsschalter eingeschaltet und gestattet den Betrieb der anderen druckfesten Gehäuse.

Wie die Figur 3 zeigt, läßt sich die Tür 15 durch eine im wesentlichen vertikale Verschiebung öffnen, nachdem die Tür außerhalb des Wirkungsbereiches des Schutzorgans 14 bzw. 40 und 41 in Figur 9 angelangt ist. Anwendbar ist dabei neben einer rein vertikal erfolgenden Verschiebung auch eine kombinierte horizontale und vertikale Verschiebung etwa gemäß der DE-C 3 035 835. Wie insbesondere die Figuren 3 und 6 zeigen, besitzt das druckfeste Gehäuse 7 im unteren Bereich der Türöffnung eine Nut 21 sowie im oberen Bereich der Türöffnung eine Leiste 22. Die Tür 15 ist dementsprechend an ihrer Unterseite mit einer Leiste 23 sowie oben mit einer Nut 24 versehen. Die Tür 15 gelangt somit unter dem Einfluß der Schwerkraft in Eingriff mit der Nut 21 und der Leiste 22. Der Schutzspalt wird entsprechend der vergrößerten Schnittdarstellung in der Figur 5 zwischen einer Flanschfläche 25 des Gehäusekörpers 26 und einer Flanschfläche 27 der Tür gebildet. Als zusätzliche Sicherung gegen das Öffnen der Tür 15 ist eine Sperrschraube 28 vorgesehen, die in der Tür 15 angebracht ist und die hinter die Türöffnung 30 des Gehäusekörpers 26 greift.

Zur leichteren Handhabung ist die Tür 15 an Scharnieren 31 gehalten, deren an der Tür 15 befindliche Schranierarme 32 einen Zapfen 33 aufweisen. Wird die Tür 15, beispielsweise mittels der in der Figur 3 gezeigten Hebestange soweit angehoben, daß die erwähnten Nuten und Leisten außer Eingriff gelangen, so werden auch die Zapfen 33 aus zugehörigen Nuten 36 der gehäuseseitigen Scharnierarme 35 ausgehoben, so daß nun die Tür 15 entsprechend der Darstellung in der Figur 7 in ihre Öffnungsstellung geschwenkt werden kann. Beim Schließen der Tür 15 gelangen die Teile unter dem Einfluß der Schwerkraft selbsttätig wieder in die in den Figuren 1, 2, 4 und 6 gezeigte Stellung. Durch Eindrehen der Sperrschraube 28 wird die Tür 15 wieder gesichert.

Zum Auffinden der Stellung des druckfesten Gehäuses gemäß der Figur 3 kann der Verstellantrieb 11 zweckmäßig mit einer weiteren Raststellung versehen sein. Erst nach einer hierfür vorgesehenen Handhabung eines geeigneten Organs läßt sich das druckfeste Gehäuse noch weiter verfahren, und zwar in die in der Figur 4 gezeigte Aus-Stellung, in der zusätzlich auch der Tastschalter 17 freigegeben ist. Hierdurch wird nun der Leistungsschalter ausgelöst, der den Sammelschienen 3 vorgeschaltet ist, so daß der Dosenteil 5 der Steckvorrichtung 4 spannungslos ist. In diesem Zustand kann das druckfeste Gehäuse 7 gefahrlos entfernt und beispielsweise durch ein Ersatzgehäuse ersetzt werden.

Die Anordnung von Rastorganen ist in den Figuren 5 und 8 dargestellt. Jedes Rastorgan umfaßt einen Zugriff 44, der gegen Federkraft abwärts bewegbar ist und hierdurch einem Rastbolzen 45 außer Eingriff mit Ausnehmungen in dem Boden des zugeordneten druckfesten Gehäuses zu bringen gestattet.

Soll dagegen zunächst kein Gehäuse eingesetzt werden, die Anlage im übrigen mit den verbleibenden (nicht dargestellten) Gehäusen wieder in Betrieb genommenwerden, so kann der Dosenteil 5 der Steckvorrichtung 4 mittels einer Schutzkappe verschlossen werden, wie dies in der Figur 5 gezeigt ist. Diese Schutzkappe kann entweder gelenkig nahe dem Dosenteil 5 gelagert sein, um sie im Bedarfsfall über den Dosenteil schwenken zu können, oder sie kann an der auch den Dosenteil 5 enthaltenden Wand des Sammelschienenkanals 2 abnehmbar befestigt sein.

Durch Einsetzen der Schutzkappe 20 wird der Tastschalter 17 betätigt, so daß der Steuerstromkreis des einspeisenden Leistungsschalters geschlossen wird. Die vorhandenen durckfesten Gehäuse können nun in Betrieb genommen werden.

**Patentansprüche**

1. Elektrische Schaltanlage (1) in schlagwettergeschützter Ausführung mit einem Sammelschienenkanal (2) auf der Eingangsseite und in Gehäusen (7) Schutzart "druckfeste Kapselung" untergebrachten Schalt- und Steuergeräten, wobei zwischen den druckfesten Gehäusen (7) und dem Sammelschienenkanal (2) schlagwettergeschützte Kontaktelemente als Bestandteil einer Steckvorrichtung (4) angeordnet sind, deren Dosenteil (5) an dem Sammelschienenkanal (2) und deren Steckerteil (6) an dem druckfesten Gehäuse (7) angeordnet ist, dadurch gekennzeichnet, daß dem Sammelschienenkanal (2) ein den Abmessungen der druckfesten Gehäuse (7) und ihrem Fahrweg angepaßtes Tragorgan (10) sowie ein die druckfesten Gehäuse (7) von oben übergreifendes Schutzorgan (14) zugeordnet ist und daß die druckfesten Gehäuse (7) eine durch im wesentlichen vertikale Verschiebung (16) zu entriegelnde Tür (15) besitzen, wobei das Schutzorgan (14) bei eingefahrenem durckfesten Gehäuse (7) eine Sperre gegen eine Öffnung der Tür (15) bildet.

2. Schaltanlage nach Anspruch 1, dadurch gekennzeichnet, daß der Dosenteil (5) der Steckvorrichtung einen Tastschalter (17) aufweist, der beim Ausfahren des druckfesten Gehäuses (7) erst nach der Trennung der Kontaktelemente der Steckvorrichtung, jedoch vor der Trennung des Steckerteiles (6) von dem Dosenteil (5) freigegeben wird, um die Schaltanlage spannungslos zu machen.

3. Schaltanlage nach Anspruch 2, dadurch gekennzeichnet, daß ein Verstellantrieb (11, 12, 13) mit wenigstens einer Raststellung vorgesehen ist, die beim Ausfahren des druckfesten Gehäuses (7) erst nach der Trennung der Kontaktelemente der Steckvorrichtung (4), jedoch vor Freigabe des Tastschalter (17) wirksam ist.

4. Schaltanlage nach Anspruch 1, dadurch gekennzeichnet, daß das Schutzorgan (14) als flächenhafte Abdeckung des druckfesten Gehäuses (7) ausgebildet ist.

**Claims**

1. An electric switchgear (1) in a flameproof design with a busbar trunking (2) on the input side and switchgears and control apparatus accommodated in the housings (7) of the protective type "pressure-resistant casing", wherein between the pressure-resistant housing (7) and the busbar trunking (2) flameproof contact elements are arranged as a component part of a plug-and-socket device (4), the box part (5) of which is arranged on the busbar trunking (2) and the plug part (6) of which is arranged on the pressure-resistant housing (7), characterised in that a supporting element (10), adapted to the dimensions of the pressure-resistant housings (7) and to their travelling path, is allocated to the busbar trunking (2), as well a protective element (14) engaging over the pressure-resistant housings (7) from above, and in that the pressure-resistant housings (7) possess a door (15) to be unlocked by substantially vertical displacement (16), wherein the protective element (14) forms a blocking device against the door (15) opening when the pressure-resistant housing (7) is installed.

2. A switchgear according to claim 1, characterised in that the box part (5) of the plug-and-socket device has a momentary-contact switch (17), which is released when the pressure-resistant housing (7) is withdrawn, firstly after separation of the contact elements from the plug-and-socket device, but before separation of the plug part (6) from the box part (5), in order to render the switchgear voltage-free.

3. A switchgear according to claim 2, characterised in that an adjusting drive (11, 12, 13) is provided with at least one locking position, which is effective when withdrawing the pressure-resistant housing (7) firstly after separation of the contact elements from the plug-and-socket device (4), but before release of the momentary-contact switch (17).

4. A switchgear according to claim 1, characterised in that the protective element (14) is constructed as a laminar cover of the pressure-resistant housing (7).

## Revendications

1. Installation de coupure électrique (1) du type antigrisouteux, comportant un conduit (2) pour barres omnibus sur le côté entrée, et des appareils de coupure et de commande logés dans des boîtiers (7) fournissant le type de protection «encapsulage résistant à la pression», et dans lequel entre les boîtiers (7) résistants à la pression et les conduits (2) pour barres omnibus sont disposés des éléments de contact antigrisouteux faisant partie d'un dispositif d'enfichage (4), dont la partie formant prise femelle (5) est installée sur le conduit (2) pour barres omnibus et dont la partie formant fiche mâle (6) est disposée sur le boîtier (7) résistant à la pression, caractérisée par le fait qu'au conduit (2) pour barres omnibus sont associés un élément de support (10) adapté aux dimensions du boîtier (7) résistant à la pression et à sa course de déplacement, ainsi qu'un élément de protection (14) s'engageant, à partir du haut, sur le boîtier (7) résistant à la pression, et que le boîtier (7) résistant à la pression possède une porte (15) pouvant être verrouillée sous l'effet d'un déplacement sensiblement vertical, l'élément de protection (14) formant un dispositif de blocage contre l'ouverture de la porte (15), lorsque le boîtier (7) résistant à la pression est dans sa position rentrée.

2. Installation de coupure suivant la revendication 1, caractérisée par le fait que la partie formant prise femelle (5) du dispositif d'enfichage comporte un poussoir (17) qui, lorsqu'on extrait le boîtier (7) résistant à la pression, est libéré uniquement après la séparation des éléments de contact du dispositif d'enfichage, mais avant la séparation entre la partie formant fiche mâle (6) et la partie formant prise femelle (5), afin de supprimer la tension dans l'installation de coupure.

3. Installation de coupure suivant la revendication 2, caractérisé par le fait qu'il est prévu un dispositif de commande de déplacement (11, 12, 13) comportant au moins une position d'encliquetage qui, lorsqu'on fait ressortir le boîtier (7) résistant à la pression, est active uniquement après la séparation des éléments de contact du dispositif d'enfichage (4), mais avant la libération du poussoir (17).

4. Installation de coupure suivant la revendication 1, caractérisée par le fait que l'élément de protection (14) est réalisée sous la forme d'un revêtement, possédant une certaine étendue, du boîtier (7) résistant à la pression.

FIG.1

FIG. 2

FIG. 3

FIG.4

FIG.5

FIG.6

FIG.7

FIG. 8

FIG.9